(19) Europäisches Patentamt
European Patent Office
Office européen des brevets

(11) **EP 4 362 471 A1**

(12) **EUROPÄISCHE PATENTANMELDUNG**

(43) Veröffentlichungstag:
**01.05.2024   Patentblatt 2024/18**

(21) Anmeldenummer: **23206445.1**

(22) Anmeldetag: **27.10.2023**

(51) Internationale Patentklassifikation (IPC):
*H04N 21/254* (2011.01)          *H04N 21/258* (2011.01)
*H04N 21/418* (2011.01)          *H04N 21/442* (2011.01)
*H04N 21/4627* (2011.01)        *H04N 21/475* (2011.01)

(52) Gemeinsame Patentklassifikation (CPC):
**H04N 21/25875; H04N 21/2541; H04N 21/418;
H04N 21/44204; H04N 21/4627; H04N 21/4753**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **28.10.2022   DE 102022128636**

(71) Anmelder: **Tiger Media International GmbH
20249 Hamburg (DE)**

(72) Erfinder: **Weitendorf, Till
20249 Hamburg (DE)**

(74) Vertreter: **LBP Lemcke, Brommer & Partner
Patentanwälte mbB
Siegfried-Kühn-Straße 4
76135 Karlsruhe (DE)**

(54) **VERFAHREN UND SYSTEM ZUM VERWALTEN EINES ZUGRIFFS AUF DIGITALE MEDIENDATEIEN**

(57)   Beschrieben wird ein Verfahren zum Verwalten eines Zugriffs auf digitale Mediendateien, welche Mediendateien von einem Medienserver (2) über ein Computernetz (3) bereitgestellt und nach einem Download auf ein digitales Endgerät (4) durch eine auf dem digitalen Endgerät (4) ausgeführte Anwendungssoftware (4a) mittels des digitalen Endgeräts (4) abgespielt oder ausgeführt werden, dadurch gekennzeichnet, dass

a) das digitale Endgerät (4) und/oder dessen Nutzer oder Nutzerin (6) mit einem Konto (2c) auf dem Medienserver (2) oder bei einer übergeordneten Verwaltungseinrichtung verknüpft ist und im Zusammenhang mit dem Download einer jeweiligen Mediendatei auf das digitale Endgerät (4) ein entsprechender Vermerk in dem Konto (2c) eingetragen wird, woraufhin die Mediendatei durch das digitale Endgerät (4) höchstens solange abgespielt oder ausgeführt wird, bis ein gleicher Vermerk in einem anderen solchen Konto eingetragen wird; und/oder

b) eine jeweilige Mediendatei längstens während der Dauer eines vordefinierten begrenzten Zeitraums durch das digitale Endgerät (4) abgespielt oder ausgeführt wird.

Fig. 1

**Beschreibung**

Die Erfindung betrifft ein Verfahren zum Verwalten eines Zugriffs auf digitale Mediendateien, welche Mediendateien von einem Medienserver über ein Computernetz bereitgestellt und nach einem Download auf ein digitales Endgerät, vorzugsweise ein Smartphone, durch eine auf dem digitalen Endgerät ausgeführte Anwendungssoftware mittels des digitalen Endgeräts abgespielt oder ausgeführt werden, nach dem Oberbegriff des Anspruchs 1 oder des Anspruchs 11.

Die Erfindung betrifft auch ein System zum Verwalten eines Zugriffs auf digitale Mediendateien, welche Mediendateien von einem Medienserver über ein Computernetz bereitgestellt und nach einem Download auf ein digitales Endgerät durch eine auf dem digitalen Endgerät ausgeführte Anwendungssoftware mittels des digitalen Endgeräts abspielbar oder ausführbar sind, umfassend:

> i) den Medienserver, auf dem oder in Wirkverbindung mit dem die Mediendateien gespeichert sind;
> ii) wenigstens ein digitales Endgerät, insbesondere Smartphone;
> iii) die auf dem digitalen Endgerät ausgeführte Anwendungssoftware;
> iv) das Computernetz, vorzugsweise das Internet, welches Computernetz den Medienserver und das wenigstens eine digitale Endgerät kommunikationstechnisch verbindet;

nach dem Oberbegriff des Anspruchs 14.

Um Mediendateien, die insbesondere nach Kauf eines geeigneten Kennungsträgers, z.B. einer (Chip-)Karte, dem Käufer oder der Käuferin zur Verfügung stehen sollen, vor unbefugtem Zugriff zu schützen, kann im Handel die Verwendung sog. (NFC-)Blocker Cards vorgesehen sein. Diese bieten jedoch, ebenso wie funkwellendichte Folientüten oder dgl. keinen 100%igen Schutz und versuchen zusätzliche Kosten.

Aus der DE 20 2019 104 321 U1 ist bekannt, zum Verwalten eines Zugriffs auf Mediendateien die Eingabe von zwei Codes vorzusehen. Ein solcher Ansatz kann in der Handhabung umständlich sein und ist nicht für alle Anwendungsfälle gleich gut geeignet.

Es besteht Bedarf an alternativen Verfahren und entsprechenden Systemen zum Verwalten eines Zugriffs auf digitale Mediendateien, die sich insbesondere für eine Verwendung mit herkömmlichen Smartphones und ähnlichen Endgeräten eignen.

Der Erfindung liegt die Aufgabe zugrunde, solche Verfahren und Systeme anzugeben.

Diese Aufgabe wird erfindungsgemäß gelöst durch ein Verfahren gemäß Anspruch 1 zum Verwalten eines Zugriffs auf digitale Mediendateien, welche Mediendateien von einem Medienserver über ein Computernetz bereitgestellt und nach einem Download auf ein digitales Endgerät, vorzugsweise ein Smartphone, durch eine auf dem digitalen Endgerät ausgeführte Anwendungssoftware mittels des digitalen Endgeräts abgespielt oder ausgeführt werden, bei dem eine jeweilige Mediendatei längstens während der Dauer eines vordefinierten begrenzten Zeitraums abgespielt oder ausgeführt wird.

Die Aufgabe wird erfindungsgemäß auch gelöst durch ein Verfahren gemäß Anspruch 11 zum Verwalten eines Zugriffs auf digitale Mediendateien, welche Mediendateien von einem Medienserver über ein Computernetz bereitgestellt und nach einem Download auf ein digitales Endgerät durch eine auf dem digitalen Endgerät ausgeführte Anwendungssoftware mittels des digitalen Endgeräts abgespielt oder ausgeführt werden, bei dem a) das digitale Endgerät und/oder dessen Nutzer oder Nutzerin mit einem Konto auf dem Medienserver oder bei einer übergeordneten Verwaltungseinrichtung verknüpft ist und im Zusammenhang mit dem Download einer jeweiligen Mediendatei auf das digitale Endgerät ein entsprechender Vermerk in dem Konto eingetragen wird, woraufhin die Mediendatei durch das digitale Endgerät höchstens solange abgespielt oder ausgeführt wird, bis ein gleicher Vermerk in einem anderen solchen Konto (insbesondere für einen anderen Nutzer oder eine andere Nutzerin) eingetragen wird; und b) optional eine jeweilige Mediendatei längstens während der Dauer eines vordefinierten begrenzten Zeitraums durch das digitale Endgerät abgespielt oder ausgeführt wird.

Die Aufgabe wird erfindungsgemäß außerdem gelöst durch ein System gemäß Anspruch 14 zum Verwalten eines Zugriffs auf digitale Mediendateien, welche Mediendateien von einem Medienserver über ein Computernetz bereitgestellt und nach einem Download auf ein digitales Endgerät durch eine auf dem digitalen Endgerät ausgeführte Anwendungssoftware mittels des digitalen Endgeräts abspielbar oder ausführbar sind, umfassend:

> i) den Medienserver, auf dem (oder in Wirkverbindung mit dem) die Mediendateien gespeichert sind;
> ii) wenigstens ein digitales Endgerät, insbesondere Smartphone;
> iii) die auf dem digitalen Endgerät ausgeführte Anwendungssoftware;
> iv) das Computernetz, vorzugsweise das Internet, welches Computernetz den Medienserver und das wenigstens eine digitale Endgerät kommunikationstechnisch verbindet;

bei dem

> a) das digitale Endgerät und/oder dessen Nutzer oder Nutzerin mit einem Konto auf dem Medienserver oder bei einer übergeordneten Verwaltungseinrichtung verknüpft ist, und dass der Medienserver oder die übergeordnete Verwaltungseinrichtung dazu ausgebildet ist, im Zusammenhang mit dem Download einer jeweiligen Mediendatei auf das digitale Endgerät einen entsprechenden Vermerk in dem Konto einzutragen, woraufhin die Mediendatei durch das digitale Endgerät höchstens solange abspielbar oder ausführbar ist, wie kein gleicher Vermerk in einem anderen solchen Konto eingetragen ist (System-Variante a)); und/oder

b) eine jeweilige Mediendatei längstens während der Dauer eines vordefinierten begrenzten Zeitraums durch das digitale Endgerät abspielbar oder ausführbar ist (System-Variante b)).

Durch die vorgeschlagene Zeitbegrenzung kann vermieden werden, dass sich ein Nutzer unbefugt dauerhaften Zugang zu Mediendateien erschleicht, z.B. durch einmaliges Scannen einer NFC-Kennung der Mediendatei in einem Ladengeschäft.

Der zugehörige Zeitraum kann mit dem Download der Mediendatei beginnen, alternativ mit dem ersten Ausführen bzw. Abspielen der Mediendatei.

Der Begriff "Mediendatei" umfasst Lieder, Hörspiele und Hörbücher ebenso wie Videos oder (Spiel-)Software oder Kombinationen hiervon.

Der Download einer Mediendatei muss nicht vollständig sein, bevor diese konsumiert werden kann, auch Streaming-Lösungen fallen grundsätzlich unter die vorliegende Erfindung.

Durch die vorgeschlagene Konto-Vermerk-Lösung kann ebenfalls vermieden werden, dass sich ein Nutzer unbefugt dauerhaften Zugang zu Mediendateien erschleicht. Die Mediendateien sind immer nur für denjenigen Nutzer verwendbar, der über den aktuellen Kontovermerk verfügt, in der Regel also der rechtmäßige Eigentümer oder die rechtmäßige Eigentümerin eines mit der Mediendatei verknüpften Kennungsträgers.

Vorteilhafte Weiterbildungen der Erfindung sind in den Unteransprüchen definiert.

Eine erste Weiterbildung des erfindungsgemäßen Verfahrens sieht vor, dass die Dauer ein Vielfaches einer vorgesehenen Wiedergabedauer der Mediendatei beträgt, vorzugsweise das Doppelte der vorgesehenen Wiedergabedauer, höchst vorzugsweise das n-fache der Wiedergabedauer, $n \in \mathbb{R}$.

So lässt sich ein guter Ausgleich zwischen der Absicherung gegen ungewollten Medienkonsum und einer komfortablen Nutzbarkeit erreichen.

Die Zahl n muss dabei insbesondere keine natürliche Zahl sein. Nach dem Vorstehenden ist n eine beliebige reelle Zahl, vorzugsweise mit $|n| > 1$ (Betrag von n größer als 1; die Zeitdauer ist dann ein "echtes Vielfaches" der vorgesehenen Wiedergabedauer der Mediendatei). Mit anderen Worten: Die Wiedergabe kann während einer beliebig vergebbaren Zeitdauer erfolgen, die länger ist als die eigentliche Wiedergabedauer der Mediendatei - die Zeitdauer kann, je nach Bedarf, Sekunden, Stunden, Tage, Wochen, Monate oder auch Jahre betragen.

Eine zweite Weiterbildung des erfindungsgemäßen Verfahrens sieht vor, dass die Mediendatei durch das digitale Endgerät identifiziert und von dem Medienserver heruntergeladen wird, indem das digitale Endgerät eine der Mediendatei zugeordnete Kennung von einem physischen Kennungsträger liest, vorzugsweise eine auf einem NFC-Chip gespeicherte Kennung, und die Mediendatei anhand dieser Kennung über das Computernetz bei dem Medienserver anfordert.

Eine solche Ausgestaltung ist besonders einfach zu benutzen, weil sie berührungslos über eine gewisse Distanz, z.B. etwa 10 cm, funktioniert.

Die Erfindung ist aber nicht auf die Verwendung von NFC-Codes beschränkt, um die Mediendateien zu identifizieren.

Eine dritte Weiterbildung des erfindungsgemäßen Verfahrens sieht vor, dass der Kennungsträger zumindest einmalig physisch an das digitale Endgerät angenähert wird, um die Kennung zu lesen, die Mediendatei zu laden und optional eine Wiedergabe der Mediendatei zu starten.

Eine solcher Vorgang ist für den Nutzer oder die Nutzerin besonders einfach auszuführen und erleichtert die Bedienbarkeit.

Eine andere Weiterbildung des erfindungsgemäßen Verfahrens sieht vor, dass bei einer erneuten Annäherung des Kennungsträgers an das digitale Endgerät die Wiedergabe der Mediendatei bei einer letzten Wiedergabeposition innerhalb der Mediendatei fortgesetzt wird.

Auf diese Weise wird der Bedienkomfort noch weiter erhöht, weil kein umständliches Navigieren in der Mediendatei erfolgen muss.

Noch eine andere Weiterbildung des erfindungsgemäßen Verfahrens sieht vor, dass für eine Wiedergabe der Mediendatei eine erneute Annäherung des Kennungsträgers an das digitale Endgerät erforderlich ist, wenn:

a) die Anwendungssoftware während der Wiedergabe geschlossen oder anderweitig beendet wird; oder
b) in der Anwendungssoftware während der Wiedergabe ein anderes Produkt, insbesondere die Wiedergabe einer anderen Mediendatei, gestartet wird; oder
c) das Ende einer der Mediendatei zugeordneten Playlist erreicht wird, woraufhin bevorzugt sich die Anwendungssoftware ohne zusätzliche Meldung schließt.

Diese Maßnahmen tragen weiter dazu bei, eine missbräuchliche Nutzung der Mediendatei zu verhindern. Außerdem lässt such dadurch sicherstellen, dass der Nutzer weiterhin im Besitz des Kennungsträgers ist, der als Nachweis dafür dient, dass der Nutzer die notwendigen Rechte für das Abspielen besitzt.

Wieder eine andere Weiterbildung des erfindungsgemäßen Verfahrens sieht vor, dass dem begrenzten Zeitraum ein Zähler zugeordnet wird, der die Wiedergabedauer überwacht und in Abhängigkeit von einer bisherigen Wiedergabedauer seinen Zählerstand ändert, wobei der Zähler von einem gegenwärtigen Zählerstand weiterzählt, wenn

a) eine andere Anwendungssoftware auf dem digitalen Endgerät die Wiedergabe unterbricht; oder
b) ein Nutzer oder eine Nutzerin des digitalen Endgeräts die Wiedergabe unterbricht.

Auf diese Weise lässt sich die Nutzung der Mediendatei einfach und effizient zeitlich beschränken.

Der Zähler muss nicht aufwärts zählen, sondern es kann sich auch um einen (Count-down-)Timer handeln.

Eine bevorzugte Weiterbildung des erfindungsgemäßen Verfahrens sieht vor, dass anschließend, d.h. nach einer Unterbrechung der Wiedergabe eine fortgesetzte Wiedergabe der Mediendatei unter Berücksichtigung eines weitergezählten Zählerstandes des Zählers erfolgt.

Dies trägt zu einer effizienten Begrenzung der Nutzungsdauer bei.

Eine äußerst bevorzugte Weiterbildung des erfindungsgemäßen Verfahrens sieht vor, dass bei Ablauf des vordefinierten Zeitraums, insbesondere bei Erreichen eines maximalen (oder minimalen) Zählerstandes, eine erneute Annäherung des Kennungsträgers an das digitale Endgerät erforderlich ist, wozu ein Nutzer oder eine Nutzerin des digitalen Endgeräts vorzugsweise entsprechend aufgefordert wird, höchst vorzugsweise mittels einer optisch und/oder akustisch wahrnehmbaren Aufforderung, die das digitale Endgerät ausgibt.

Auf diese Weise lässt sich die Dauer des Medienkonsums effizient begrenzen, denn insbesondere nur ein tatsächlicher Besitzer des oben erwähnten Kennungsträgers wird hierzu in der Lage sein und den Kennungsträger ohne Weiteres erneut an das Endgerät annähern können.

Eine andere bevorzugte Weiterbildung des erfindungsgemäßen Verfahrens sieht noch vor, dass die Wiedergabe ohne eine vorherige Registrierung eines Nutzers oder einer Nutzerin des digitalen Endgeräts bei dem Medienserver oder einer übergeordneten Verwaltungseinrichtung erfolgt.

Dies trägt zu einer vereinfachten Nutzung bei, weil keine vorherige Anmeldung oder Registrierung erforderlich ist.

Im Rahmen von entsprechenden Weiterbildungen des erfindungsgemäßen Systems ist dieses ausgebildet zur Durchführung einer Ausgestaltung des erfindungsgemäßen Verfahrens, vorzugsweise indem:

i) die Anwendungssoftware derart eingerichtet ist, dass die Dauer ein Vielfaches einer Wiedergabedauer der Mediendatei beträgt, vorzugsweise das Doppelte der Wiedergabedauer, höchst vorzugsweise das n-fache der Wiedergabedauer, $n \in \mathbb{R}$; oder

ii) das digitale Endgerät dazu ausgebildet ist, die Mediendatei zu identifizieren und von dem Medienserver herunterzuladen, indem das digitale Endgerät eine Leseeinheit zum Lesen einer der Mediendatei zugeordneten Kennung von einem physischen Kennungsträger aufweist, vorzugsweise eine NFC-Leseeinheit für eine auf einem NFC-Chip gespeicherte Kennung, und dazu ausgebildet ist, die Mediendatei anhand dieser Kennung über das Computernetz bei dem Medienserver anzufordern, wobei das System weiterhin wenigstens einen physischen Kennungsträger mit einer solchen Kennung umfasst; oder

iii) das digitale Endgerät dazu ausgebildet ist, insbesondere mittels der Anwendungssoftware, die Kennung von dem Kennungsträger gemäß ii) zu lesen, wenn der Kennungsträger physisch an das digitale Endgerät angenähert ist, mittels der Kennung die Mediendatei zu laden und optional eine Wiedergabe der Mediendatei zu starten; oder

iv) das digitale Endgerät dazu ausgebildet ist, insbesondere mittels der Anwendungssoftware, bei einer erneuten Annäherung des Kennungsträgers gemäß ii) an das digitale Endgerät nach der Annäherung unter iii) die Wiedergabe der Mediendatei bei einer letzten Wiedergabeposition innerhalb der Mediendatei fortzusetzen; oder

v) das digitale Endgerät dazu ausgebildet ist, insbesondere mittels der Anwendungssoftware, für eine Wiedergabe der Mediendatei nach der Annäherung unter iii) eine erneute Annäherung des Kennungsträgers an das digitale Endgerät abzuwarten, wenn:

a) die Anwendungssoftware während der Wiedergabe geschlossen oder anderweitig beendet wurde; oder
b) in der Anwendungssoftware während der Wiedergabe ein anderes Produkt, insbesondere die Wiedergabe eine anderen Mediendatei, gestartet wurde; oder
c) das Ende einer der Mediendatei zugeordneten Playlist erreicht wurde, woraufhin bevorzugt die Anwendungssoftware dazu ausgebildet ist, sich ohne zusätzliche Meldung zu schließen; oder

vi) in der Anwendungssoftware dem begrenzten Zeitraum gemäß System-Variante b) ein Zähler zum Überwachen der Wiedergabedauer zugeordnet ist, welcher Zähler dazu eingerichtet ist, in Abhängigkeit von einer bisherigen Wiedergabedauer seinen Zählerstand zu ändern, wobei der Zähler von einem gegenwärtigen Zählerstand weiterzählt, wenn

a) eine andere Anwendungssoftware auf dem digitalen Endgerät die Wiedergabe unterbricht;

oder

b) ein Nutzer oder eine Nutzerin des digitalen Endgeräts die Wiedergabe unterbricht; oder

vii) die Anwendungssoftware dazu ausgebildet ist, anschließend eine fortgesetzte Wiedergabe unter Berücksichtigung eines weitergezählten Zählerstandes des Zählers gemäß vi) zu veranlassen; oder

viii) die Anwendungssoftware dazu eingerichtet ist, bei Ablauf des vordefinierten Zeitraums gemäß System-Variante b), insbesondere bei Erreichen eines maximalen Zählerstandes des Zählers gemäß vi), eine erneute Annäherung des Kennungsträgers gemäß ii) an das digitale Endgerät abzuwarten, wozu die Anwendungssoftware vorzugsweise dazu ausgebildet ist, einen Nutzer oder eine Nutzerin des digitalen Endgeräts entsprechend aufzufordern, höchst vorzugsweise mittels einer optisch und/oder akustisch wahrnehmbaren Aufforderung, die durch das digitale Endgerät ausgebbar ist; oder

ix) im Fall der System-Variante b) die Anwendungssoftware dazu ausgebildet ist, die Wiedergabe ohne eine vorherige Registrierung eines Nutzers oder einer Nutzerin des digitalen Endgeräts bei dem Medienserver oder einer übergeordneten Verwaltungseinrichtung zuzulassen; oder

x) im Fall der System-Variante a) das digitale Endgerät so eingerichtet ist, vorzugsweise mittels der Anwendungssoftware, dass bei auf dem digitalen Endgerät zum Zeitpunkt einer Annäherung des Kennungsträgers gemäß ii) an das digitale Endgerät aktiver Anwendungssoftware anschließend die mit der Kennung verknüpfte Mediendatei in der Anwendungssoftware für ein betreffendes Konto für die Wiedergabe verfügbar ist, vorzugsweise über ein Shop-Layout, auch nachdem der Kennungsträger wieder von dem digitalen Endgerät entfernt wurde; oder

xi) im Fall der System-Variante a) das digitale Endgerät so eingerichtet ist, vorzugsweise mittels der Anwendungssoftware, dass die Mediendatei in der Anwendungssoftware für das betreffende Konto nicht länger verfügbar ist, sobald die mit der Kennung gemäß ii) verknüpfte Mediendatei in der Anwendungssoftware für ein anderes Konto auf dem Medienserver oder bei der übergeordneten Verwaltungseinrichtung verfügbar gemacht ist.

Auf die hiermit verbundenen Vorteile wurde weiter oben bei der Beschreibung des Verfahrens schon genauer eingegangen.

Wenn vorliegend davon die Rede ist, dass das Endgerät zu einem bestimmten Zweck ausgebildet ist, kann dies vorzugsweise durch entsprechende Ausgestaltung der Anwendungssoftware erreicht werden.

Ein alternativer Ansatz beinhaltet die Freigabe der Mediendatei nach Art eines Gutscheins: Der Kennungsträger fungiert als Gutschein für das Produkt (die Mediendatei) und enthält einen Aktivierungscode, der frei übertragbar ist. Vorzugsweise wird per NFC mittels des Endgeräts beim Lesen der Kennung ein Link geöffnet. Wenn der Gutschein (von einem gegebenen Nutzer oder einer Nutzerin oder überhaupt) noch nicht eingelöst wurde, wird eine Gutscheineingabe-Maske geöffnet. Wenn der Gutschein bereits eingelöst wurde, öffnet sich ein (Deep-)Link zur Produktliste des Nutzers oder der Nutzerin. Es kann vorgesehen sein, dass der Gutschein nur einmalig einlösbar ist oder dass immer die letzte Eingabe bzw. das betreffende Endgerät den (exklusiven) Zugriff erhält.

Ein anderer alternativer Ansatz beinhaltet, dass die Mediendatei durch das digitale Endgerät identifiziert und von dem Medienserver heruntergeladen wird, indem das digitale Endgerät eine der Mediendatei zugeordnete Kennung von einem physischen Kennungsträger liest, vorzugsweise eine auf einem NFC-Chip gespeicherte Kennung, und die Mediendatei anhand dieser Kennung über das Computernetz bei dem Medienserver anfordert. Der Medienserver oder eine übergeordnete Verwaltungseinrichtung prüft im Zusammenhang mit dem Download einer jeweiligen Mediendatei auf das digitale Endgerät bzw. bei entsprechender Anforderung, insbesondere im Falle eines Streaming, ob dieselbe Kennung bereits zeitgleich mit einem Download der jeweiligen Mediendatei auf ein anderes digitales Endgerät verknüpft ist, ob also ein entsprechender Download schon erfolgt, woraufhin der Download der Mediendatei durch den Medienserver gestoppt wird - für eines oder für beide der genannten Endgeräte. Auf diese Weise lässt sich die Nutzung unberechtigt vervielfältigter Kennungen (durch Kopieren) unterbinden.

Ein wieder anderer alternativer Ansatz beinhaltet, dass die Mediendatei durch das digitale Endgerät identifiziert und von dem Medienserver heruntergeladen wird, indem das digitale Endgerät eine der Mediendatei zugeordnete Kennung von einem physischen Kennungsträger liest, vorzugsweise eine auf einem NFC-Chip gespeicherte Kennung, und die Mediendatei anhand dieser Kennung über das Computernetz bei dem Medienserver anfordert. Der Medienserver oder eine übergeordnete Verwaltungseinrichtung prüft im Zusammenhang mit dem Download einer jeweiligen Mediendatei auf das digitale Endgerät, insbesondere im Falle eines Streaming, beispielsweise durch Analyse einer IP-Adresse oder dgl. des Endgeräts, ob dieselbe Kennung bereits zuvor mit einem Download der jeweiligen Mediendatei an einem anderen Ort verknüpft ist, der innerhalb einer Zeitdifferenz zwischen den beiden Downloads geographisch nicht erreichbar zu sein scheint (zu große räumliche Distanz), woraufhin der Download der Mediendatei durch den Medienserver gestoppt wird- für eines oder für beide der genannten Endgeräte.

Auch auf diese Weise lässt sich die Nutzung unberechtigt vervielfältigter Kennungen (durch Kopieren) unterbinden.

Noch ein anderer alternativer Ansatz, der insbesondere auch mit den beiden vorstehend beschriebenen Ansätzen kombinierbar ist, beinhaltet, dass die Mediendatei durch das digitale Endgerät identifiziert und von dem Medienserver heruntergeladen wird, indem das digitale Endgerät eine der Mediendatei zugeordnete Kennung von einem physischen Kennungsträger liest, vorzugsweise eine auf einem NFC-Chip gespeicherte Kennung, und die Mediendatei anhand dieser Kennung über das Computernetz bei dem Medienserver anfordert. Zusätzlich wird der Nutzer des Kennungsträgers dazu aufgefordert, eine auf dem Kennungsträger vorhandene oder zusammen mit dem Kennungsträger an den Kunden ausgelieferte, für den Nutzer lesbare zusätzliche Kennung (z.B. einen Zahlencode) in das Endgerät einzugeben. Dies kann z.B. geschehen, wenn festgestellt wird, dass ein doppelter oder zeitgleicher Download erfolgt, wie vorstehend beschrieben. Anderenfalls kann die Eingabe der zusätzlichen Kennung auch generell erforderlich sein. Der Medienserver oder eine übergeordnete Verwaltungseinrichtung führt eine Liste mit gültigen Kombinationen aus Kennung und zusätzlicher Kennung und prüft im Zusammenhang mit dem Download einer jeweiligen Mediendatei auf das digitale Endgerät, insbesondere im Falle eines Streaming, ob die Kennung und die zusätzliche Kennung eine gültige Kombination bilden, bevor der Download für dasjenige Endgerät autorisiert wird, bei dem die zusätzliche Kennung korrekt eingegeben wurde.

Auch dieser Ansatz trägt dazu bei, die Nutzung unberechtigt vervielfältigter Kennungen (durch Kopieren) zu unterbinden.

In allen diesen alternativen Fällen ist vorgesehen, das erfindungsgemäße System entsprechend auszubilden, damit es das beschriebene Verfahren durchführen kann: Insbesondere ist das digitale Endgerät dazu ausgebildet, vorzugsweise mittels der Anwendungssoftware, die Kennung von dem Kennungsträger zu lesen, wenn der Kennungsträger physisch an das digitale Endgerät angenähert ist, mittels der Kennung die Mediendatei zu laden und optional eine Wiedergabe der Mediendatei zu starten. Außerdem sind der Medienserver bzw. die übergeordnete Verwaltungseinrichtung zur Durchführung der beschriebenen Prüfungen und Analysen eingerichtet.

Im Falle der letztgenannten Alternative verfügt das Endgerät über eine Eingabemöglichkeit für die zusätzliche Kennung, z.B. per Tastatur, Touchscreen, Spracheingabe oder fotographisch. Die zusätzliche Kennung kann auch nach Art eines Wasserzeichens oder Hologramms ausgebildet sein, um sie möglichst fälschungssicher zu machen. Vorzugsweise ist der eigentliche Inhalt der zusätzlichen Kennung nicht durch den Nutzer selbst lesbar, d.h. für das menschliche Auge nicht ohne weiteres erkennbar.

Alternativ kann auch vorgesehen sein, dass der Nutzer beim ersten Aktivieren des Kennungsträgers auf einem neuen Useraccount (d.h. einem Konto auf dem Medienserver oder bei der übergeordneten Verwaltungseinrichtung) immer auch die zusätzliche Kennung eingeben muss - z.B. einen vierstelligen Code, der mitgeliefert wird. Diese Kennung kann auf dem Kennungsträger aufgedruckt sein und kann auf einem Kaufbeleg oder dgl. mitgeliefert werden. Die Aktivierung des Kennungsträgers kann dann zusätzlich auch noch über eine E-Mail, Messanger-Nachricht oder dgl. erfolgen, die an die jeweilige Nutzer-Adresse des betreffenden Kontos gesendet wird. Eine solche Nachricht kann auch zusätzliche oder alternative Codefolgen ergänzen oder bereitstellen, z.B. Ziffer 5 und/oder Ziffer 6 zu einem zunächst nur vierstelligen Code, oder sie kann alternativ den Code komplett überschreiben. Erst wenn der Nutzer dann in der Mail/Nachricht die Aktion "Kennung jetzt aktivieren" anwählt, ist der Kennungsträger auch wirklich aktiv. Somit ist der Kennungsträger eindeutig immer einem Useraccount zugeordnet; wird er auf einem zweiten, anderen oder neuen Useraccount abgespielt, wird der Download ganz verhindert, nur temporär aktiviert oder überhaupt nicht funktionieren. Der Nutzer wird dann aufgefordert, die zusätzliche Kennung (erneut) einzugeben. Optional kann auch ein vorheriger Nutzer um Zustimmung gebeten werden; wird diese erteilt, ist der Kennungsträger für den (neuen) Nutzer aktiviert. Alternativ kann der vorige Nutzer auch in seinem Kunden-Backend (Nutzerbereich auf dem Medienserver oder bei der übergeordneten Verwaltungseinrichtung) vorab abgeben, dass er den Kennungsträger weitergegeben hat und dieser nicht mehr seinem Konto zugehörig ist. Damit ist die betreffende Kennung "frei" und wird automatisch demjenigen Konto zugeordnet, in dem sie als nächstes aktiviert wird. Dies ist entweder mit oder ohne zusätzliche Kennung möglich, wie vorstehend beschrieben.

Wiederum alternativ kann der Kennungsträger auch die Mediendatei eines Kunden/Nutzers abspielen bzw. identifizieren, wenn dieser bereits ein gültiges Streamingangebot gekauft und dafür bezahlt, und wenn die Mediendatei in diesem Streamingangebot vorhanden ist. Dann funktioniert der Kennungsträger einfach nur als eine Art physischer Link. Wenn die Mediendatei jedoch nicht in dem Streamingangebot enthalten ist und auch der Kennungsträger dem betreffenden Konto nicht zugeordnet ist, so kann der Medienserver oder die übergeordnete Verwaltungseinrichtung den Nutzer auffordern - neben den Alternativen, die vorstehend schon beschrieben wurden -, einen zu dem Kennungsträger gehörigen digitalen Zugang käuflich zu erwerben. Nach dem Kauf kann der Nutzer wiederum einen zusätzlichen Code per Mail oder dgl. erhalten und damit den Kennungsträger aktivieren. Somit kommt es letztendlich nicht darauf an, ob ein Kennungsträger "echt" oder gefälscht ist, weil der Nutzer einen "echten" Zugang nachträglich käuflich erworben hat. Dieser Ansatz ist nicht auf Streaming beschränkt.

Speziell der zuletzt beschriebene Ansatz kann mit den bereits zuvor genannten Verfahren kombiniert werden: so kann z.B. das Kaufangebot an den Nutzer anstelle oder vor einer "Totschaltung" des Kennungsträgers erfolgen, die den Download verhindert.

Viele weitere Kombinationen der vorstehend beschriebenen Alternativen sind im Rahmen der vorstehenden Offenbarung möglich, sofern sie zu technisch sinnvollen Gegenständen führen.

Weitere Eigenschaften und Vorteile der Erfindung ergeben sich aus der nachfolgenden Beschreibung von Ausführungsbeispielen anhand der Zeichnung.

Figur 1 zeigt eine schematische Darstellung eines erfindungsgemäßen Systems;

Figur 2 zeigt ein Ablaufdiagramm einer ersten Ausgestaltung des erfindungsgemäßen Verfahrens; und

Figur 3 zeigt ein Ablaufdiagramm einer zweiten Ausgestaltung des erfindungsgemäßen Verfahrens.

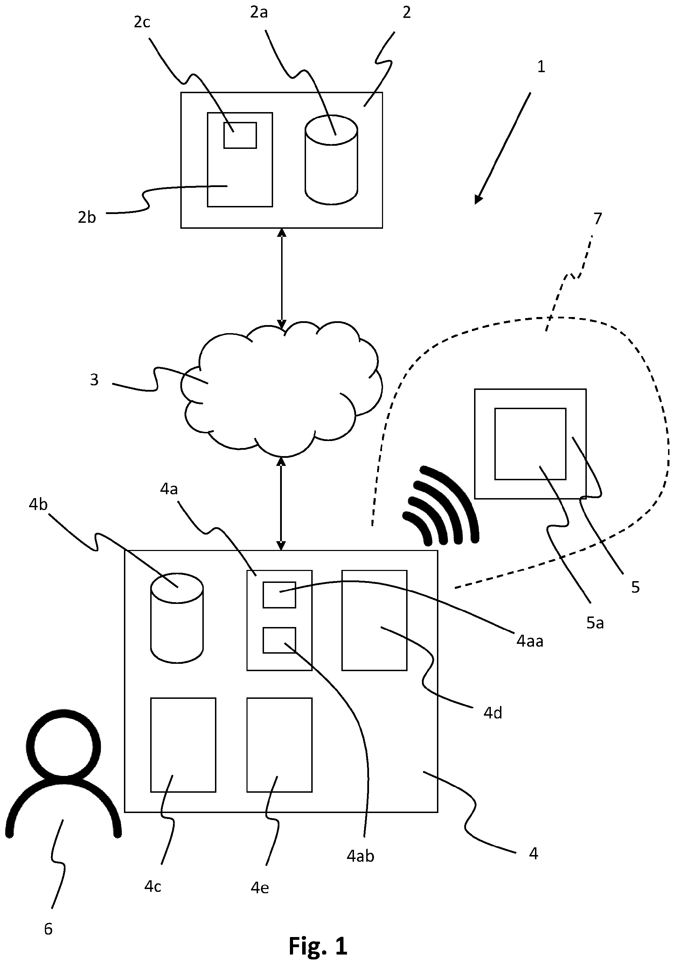

Figur 1 zeigt ein erfindungsgemäßes System 1 zum Verwalten eines Zugriffs auf digitale Mediendateien, welche Mediendateien von einem Medienserver 2 über ein Computernetz 3, z.B. das Internet, bereitgestellt und nach einem Download auf ein digitales Endgerät 4 durch eine auf dem digitalen Endgerät 4 ausgeführte Anwendungssoftware 4a mittels des digitalen Endgeräts 4 abspielbar oder ausführbar sind.

Entsprechend umfasst das System 1 den Medienserver 2, auf dem oder in Wirkverbindung mit dem die Mediendateien gespeichert sind, wozu der Medienserver 2 einen entsprechend ausgebildeten Medienspeicher 2a aufweist. Die einzelnen Mediendateien sind nicht dargestellt. Weiterhin umfasst das System 1 wenigstens ein digitales Endgerät 4, insbesondere ein Smartphone oder ein Tablet, auf welchem digitalen Endgerät 4 die genannte Anwendungssoftware (kurz: App) 4a ausgeführt wird bzw. ausführbar ist (insbesondere mittels eines entsprechend eingerichteten Prozessors, nicht gezeigt). Bezugszeichen 3 bezeichnet das Computernetz, vorzugsweise also das Internet, welches Computernetz 3 den Medienserver 2 und das wenigstens eine digitale Endgerät 4 kommunikationstechnisch verbindet. Der Medienserver 2 umfasst außerdem noch eine Verwaltungseinrichtung 2b, die es ermöglicht, sog. Nutzerkonten oder Accounts für einen Zugriff auf den Medienserver 2 zu führen, was dem Fachmann grundsätzlich bekannt ist. Die Verwaltungseinrichtung kann auch außerhalb des eigentlichen Medienservers 2 als übergeordnete Verwaltungseinrichtung ausgebildet sein.

Das digitale Endgerät 4 umfasst neben der App 4a zumindest noch eine Speichereinheit 4b (insbesondere für Programmdaten der App 4a und/oder für heruntergeladene Mediendateien), eine Wiedergabeeinheit 4c zum Wiedergeben von Inhalten der Mediendateien (insbesondere Bild, Ton, Video, etc.), ein Lesegerät 4d zum Lesen einer Kennung 5a von einem Kennungsträger 5 (insbesondere einer NFC-Kennung von einer Karte, die einen NFC-Chip aufweist) und eine Eingabeeinheit 4e (insbesondere eine Tastatur, ein Mikrofon, eine Kamera und/oder ein berührungsempfindliches (Touch-)Display), über die ein Nutzer oder eine Nutzerin 6 mit dem digitalen Endgerät 4 interagieren kann, insbesondere um die App 4a zu steuern. Das Lesegerät 4d besitzt eine bestimmte Leserreichweite, die in der Figur durch die gestrichelte Linie bzw. einen entsprechenden Bereich 7 symbolisiert ist. Damit das Lesegerät 4d die Kennung 5a lesen kann, bei der es sich vorzugsweise um einen alphanumerischen Code handelt, der eine bestimmte Mediendatei auf dem Medienserver 2 identifiziert bzw. einen entsprechenden Download-Link bereitstellt (öffnet), muss der Kennungsträger 5 zumindest einmalig kurzzeitig in den Bereich 7 verbracht, d.h. an das Endgerät 4 angenähert werden, wie dargestellt.

Das Endgerät 4 kann dann grundsätzlich die betreffende Mediendatei von dem Medienserver 2 über das Computernetz 3 herunterladen, wozu es eine entsprechende Kommunikationsverbindung zu dem Medienserver 2 aufbaut. Dies ist an sich bekannt, sodass hierauf an dieser Stelle nicht näher einzugehen ist.

Das digitale Endgerät 4 und/oder dessen Nutzer oder Nutzerin 6 ist bevorzugt mit einem Konto auf dem Medienserver 2 (welches Konto 2c insbesondere innerhalb der dortigen Verwaltungseinrichtung 2b geführt wird, wie dargestellt) oder alternativ mit einem Konto (Nutzerkonto) bei einer übergeordneten Verwaltungseinrichtung (nicht gezeigt) verknüpft. Der Medienserver 2 oder die übergeordnete Verwaltungseinrichtung (nicht gezeigt) ist dazu ausgebildet, im Zusammenhang mit dem Download einer jeweiligen Mediendatei auf das digitale Endgerät 4 einen entsprechenden Vermerk in dem (Nutzer-)Konto 2c einzutragen, woraufhin die Mediendatei durch das digitale Endgerät 4 höchstens solange abspielbar oder ausführbar ist, wie kein gleicher Vermerk in einem anderen solchen Konto (also insbesondere in dem Konto eines anderen Nutzers bzw. einer anderen Nutzerin) eingetragen ist. Alternativ oder zusätzlich kann optional geregelt sein, insbesondere durch eine entsprechende Einstellung in der App 4a und/oder eine inhärente Eigenschaft (Parametrisierung) der betreffenden Mediendatei, dass eine jeweilige Mediendatei längstens während der Dauer eines vordefinierten begrenzten Zeitraums durch das digitale Endgerät 4 abspielbar oder ausführbar ist.

Vorzugsweise umfasst das digitale Endgerät 4 zu diesem Zweck einen Zähler oder (Countdown-)Timer 4aa, insbesondere einen in der App 4a ausgebildeten Software-Zähler, wodurch dem begrenzten Zeitraum ein Zähler 4aa zugeordnet wird, der die Wiedergabedauer überwacht und in Abhängigkeit von einer bisherigen Wiedergabedauer der in Rede stehenden Mediendatei seinen Zählerstand ändert, beispielsweise erhöht oder erniedrigt, je nach Ausgestaltung des Zählers 4aa. Der Zähler 4aa zählt bei Wiedergabe der Mediendatei von einem gegenwärtigen Zählerstand weiter, wenn eine andere Anwendungssoftware (nicht gezeigt) auf dem digitalen Endgerät 4 die Wiedergabe unterbricht oder wenn der Nutzer oder die Nutzerin 6 des digitalen Endgeräts

4 die Wiedergabe unterbricht, z.B. über die Eingabeeinheit 4e. Anschließend erfolgt eine fortgesetzte Wiedergabe unter Berücksichtigung eines weitergezählten Zählerstandes des Zählers, z.B. nach einer erneuten entsprechenden Eingabe durch den Nutzer oder die Nutzerin 6 über die Eingabeeinheit 4e.

Bei Ablauf des vordefinierten Zeitraums, also bei Erreichen eines maximalen (oder minimalen) Zählerstandes des Zählers 4aa, ist bevorzugt eine erneute Annäherung des Kennungsträgers 5 an das digitale Endgerät 4 bzw. in den Bereich 7 erforderlich, wozu der Nutzer oder die Nutzerin 6 des digitalen Endgeräts 4 vorzugsweise entsprechend aufgefordert wird, höchst vorzugsweise mittels einer optisch und/oder akustisch wahrnehmbaren Aufforderung, die das digitale Endgerät 4 über die Wiedergabeeinheit 4c ausgibt.

Die Erfindung ist ausdrücklich nicht darauf beschränkt, dass für den Nutzer oder die Nutzerin 6 ein Konto 2c auf dem Medienserver 2 (oder der Verwaltungseinrichtung) existiert: die Wiedergabe kann auch ohne eine vorherige Registrierung eines Nutzers oder einer Nutzerin 6 des digitalen Endgeräts 4 bei dem Medienserver 2 oder einer übergeordneten Verwaltungseinrichtung erfolgen, wenn die Zeitbegrenzung mittels des Zählers 4aa eingerichtet ist.

Wie beschrieben, wird die Mediendatei durch das digitale Endgerät 4 anhand der Kennung 5a identifiziert und von dem Medienserver 2 heruntergeladen, indem das digitale Endgerät 4 die der Mediendatei zugeordnete Kennung 5a von dem physischen Kennungsträger 5 liest und die Mediendatei anhand dieser Kennung 5a über das Computernetz 3 bei dem Medienserver 2 anfordert. Dazu wird der Kennungsträger 5 zumindest einmalig physisch an das digitale Endgerät angenähert (in den Bereich 7), um die Kennung 5a zu lesen, die Mediendatei zu laden und optional unmittelbar auch eine Wiedergabe der Mediendatei zu starten. Wenn auf dem digitalen Endgerät 4 die Anwendungssoftware 4a aktiv ist (d.h. ausgeführt wird), während der Kennungsträger 5 dem digitalen Endgerät 4 angenähert wird, kann vorzugsweise vorgesehen sein, dass anschließend die mit der Kennung 5a verknüpfte Mediendatei in der Anwendungssoftware 4a für ein betreffendes Konto 2c (also für einen Nutzer oder eine Nutzerin 6) für die Wiedergabe auf dem digitalen Endgerät 4 verfügbar ist, vorzugsweise über ein durch die App 4 implementiertes Menü bzw. Shop-Layout 4ab, auch nachdem der Kennungsträger 5 wieder von dem digitalen Endgerät 4 entfernt wurde.

Andererseits ist bevorzugt die Mediendatei in der Anwendungssoftware 4 für das betreffende Konto 2c (also für den Nutzer oder die Nutzerin 6) nicht länger verfügbar, sobald die mit der Kennung 5a verknüpfte Mediendatei in der Anwendungssoftware für ein anderes Konto, z.B. auf einem anderen Endgerät, verfügbar gemacht wird, insbesondere mit den oben beschriebenen Verfahrensschritten (Annähern des Kennungsträgers 5 an das Endgerät 4, etc.).

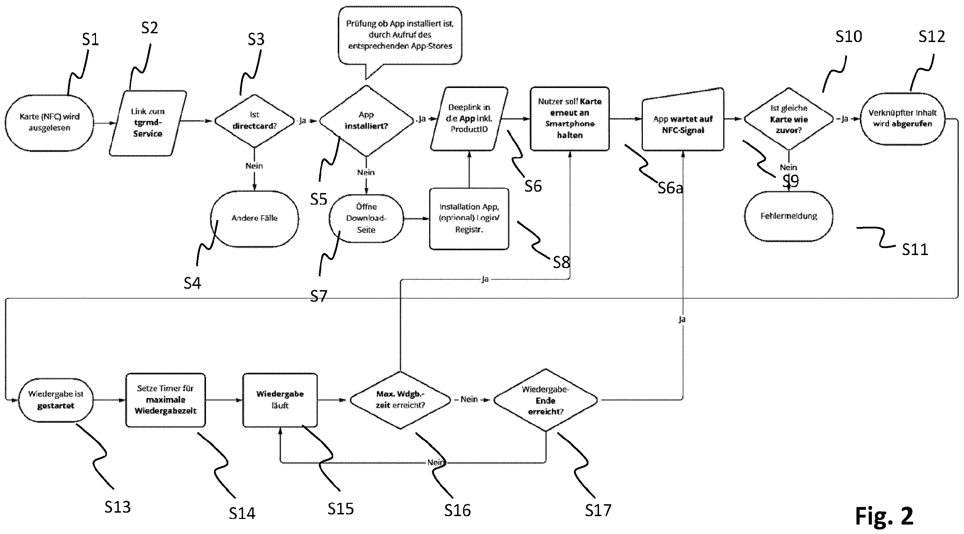

Figur 2 stellt den Ablauf eines erfindungsgemäßen Verfahrens grafisch dar, wie es insbesondere mit dem System aus Figur 1 (auf die hinsichtlich der Bezugszeichen Bezug genommen wird) ausführbar ist.

Das Verfahren beginnt mit Schritt S1, indem der Kennungsträger 5, nachfolgend auch als "directcard" bezeichnet, aktiviert wird, indem er in den Bereich 7 (vgl. Figur 1) gebracht wird (Aktivierung via NFC auf einem Smartphone (Endgerät 4)). Auf dem Endgerät 4 öffnet dies einen durch die Kennung 5a codierten bzw. in der Kennung enthaltenen Link, der zu einem Dienst ("tgrmd-Service") auf dem Medienserver 2 führt (z.B. https//tgmrd.de/dc/0089-xvfcv), siehe Schritt S2. In Schritt S3 erfolgt eine Abfrage (innerhalb des Medienservers 2), ob es sich bei den Kennungsträger 5 tatsächlich um eine "directcard" handelt, für die das vorliegende Verfahren konzipiert ist. Falls nicht, endet das Verfahren in Schritt S4, ggf. mit der Ausgabe einer entsprechenden (Fehler-)Meldung: "Andere/Falsche Karte!". Falls ja, öffnet sich in Schritt S5 auf dem digitalen Endgerät 4 ein sog. Deeplink beinhaltend die Abfrage, ob die Anwendungssoftware (App) 4a auf dem Endgerät 4 installiert ist. Falls ja, wird das Verfahren mit Schritt S6 fortgesetzt. Falls nein, wird in Schritt S7 eine Download-Seite für die Anwendungssoftware 4a geöffnet, und die App 4a wird in Schritt S8 installiert (nach entsprechender User-Bestätigung). Der verwendete Begriff "Deeplink" macht deutlich, dass der Link auf Inhalte verweist, die sich "tief" innerhalb der App bzw. Webseite befinden - in diesem Fall Links direkt auf einzelne Hörspiele oder bestimmte Listen von Hörspielen o.ä. und bspw. nicht nur auf eine Einstiegsseite der Anwendung. Danach geht das Verfahren in Schritt S6 weiter, in dem wiederum ein sog. Deeplink zur durch die Kennung 5a identifizierte Mediendatei (dem "Produkt") geöffnet wird. Danach wird der Nutzer oder die Nutzerin 6 in Schritt 6a aufgefordert wird, den Kennungsträger 5 erneut an das Endgerät 4 zu halten (Bereich 7). In dem Folge-Schritt S9 wartet die App 4a auf den entsprechenden NFC-Input. Ist dieser erfolgt, wird in Schritt S10 erneut abgefragt, ob es sich um eine "directcard" handelt. In einer insbesondere auf dem Medienserver 2 geführten Datenbank (nicht explizit gezeigt) ist jede NFC-Karte (hier allgemein als "Kennungsträger" bezeichnet) gespeichert, und anhand ihres jeweiligen Typs (im Falle der Anmelderin z.B. TIGERCARD, WILDCARD, MULTI-TIGERCARD oder TIGERTICKET) wird dann entschieden, ob die betreffende Karte auch als "directcard" nutzbar ist, wie hier beschreiben. Neben dem Karten-Typ können bei Bedarf auch noch andere Kriterien zum Einsatz, um dies zu entscheiden. Falls nicht, wird in Schritt S11 eine entsprechende Fehlermeldung ausgegeben. Fall ja, kann in Schritt S12 mit dem Download bzw. der Wiedergabe des betreffenden Medieninhalts (der verlinkten Mediendatei) begonnen werden.

Die eigentliche Wiedergabe startet in Schritt S13. In Schritt S14 wird der Zähler 4aa auf eine maximale Wiedergabedauer eingestellt, die das Doppelte (oder allgemein das n-fache) einer Content-Länge (nominelle Wiedergabelänge) der Mediendatei entspricht. Schritt S15 bezeichnet die tatsächliche Wiedergabe. In Schritt S16 erfolgt die Abfrage, ob die maximale Wiedergabedauer nach Maßgabe durch den Zähler 4aa schon erreicht wurde. Falls ja, springt das Verfahren wieder nach Schritt S6 (siehe oben). Falls nein, geht es mit Schritt S17 weiter, in dem abgefragt wird, ob das Ende einer zu der Mediendatei gehörigen Playlist (Titelliste, Kapitelliste, etc.) erreicht wurde. Falls ja, springt das Verfahren zurück nach Schritt S9. Falls nicht, kehrt das Verfahren nach Schritt S15 zurück.

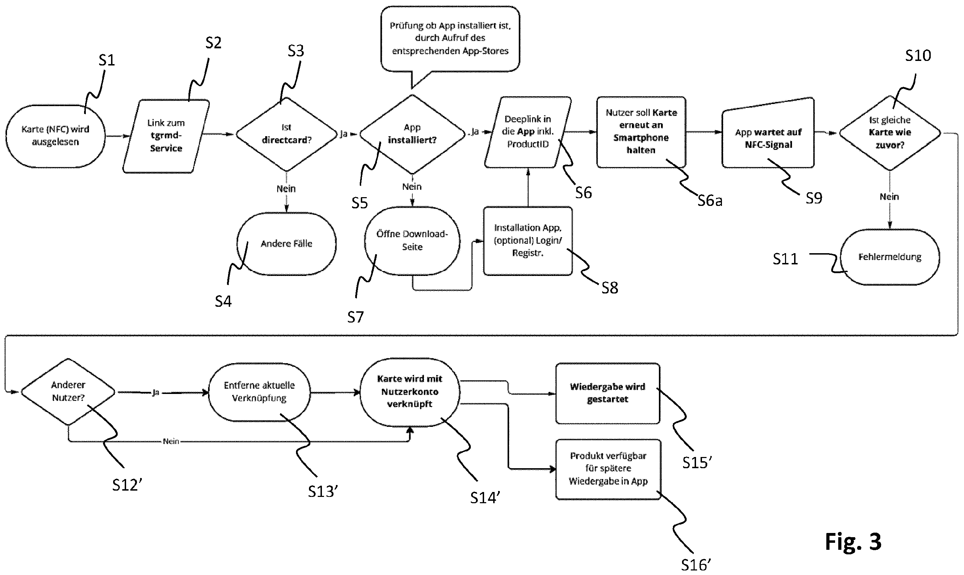

Figur 3 stellt den Ablauf eines weiteren erfindungsgemäßen Verfahrens grafisch dar, wie es insbesondere mit dem System aus Figur 1 ausführbar ist (auf die hinsichtlich der Bezugszeichen wiederum Bezug genommen wird).

Die Verfahrensschritte S1 bis S11 entsprechen den Schritten gleicher Nummerierung aus Figur 2, die bereits weiter oben beschreiben wurden. Hierauf darf verwiesen werden.

In Schritt S12' wird abgefragt, ob die vorliegende "directcard" bereits mit einem anderen Konto (analog zu Konto 2c) verknüpft ist, ob dort also ein betreffender Konto-Vermerk existiert. Insbesondere stellt die App 4a eine entsprechende Anfrage an den Medienserver 2 (oder an die übergeordnete Verwaltungseinrichtung). Falls ja, wird die Karte bzw. ihre Kennung oder der Vermerk in Schritt S13' aus dem anderen Konto entfernt und in Schritt S14' dem (Nutzer-)Konto 2c hinzugefügt. Falls die Abfrage in Schritt S12' verneint wird, springt das Verfahren von Schritt S12' direkt nach Schritt S14'. Dann kann in Schritt S15' die Wiedergabe der Mediendatei erfolgen; parallel wird sie in Schritt 16' in einem sog. Content-Layout (einer Art Medien-Inhaltsverzeichnis) des betreffenden Nutzerkontos verfügbar gemacht - bis ein anderer Nutzer oder eine andere Nutzerin das Zugriffsrecht "übernimmt".

Die Verfahren gemäß Figur 2 und Figur 3 können auch kombiniert werden (Zugriff über Konto mit Zeitbegrenzung).

Es sei nochmals darauf hingewiesen, dass im Rahmen der vorliegenden Erfindung selbstverständlich ein (zumindest) partieller Download der Mediendatei vom Medienserver 2 auf das Endgerät 4 und eine dortigen (Zwischen-)Speicherung erfolgen muss, bevor eine Wiedergabe stattfinden kann. Dies ist dem Fachmann bewusst, auch wenn dies nicht ausdrücklich beschrieben wurde.

**Patentansprüche**

1. Verfahren zum Verwalten eines Zugriffs auf digitale Mediendateien, welche Mediendateien von einem Medienserver (2) über ein Computernetz (3) bereitgestellt und nach einem Download auf ein digitales Endgerät (4), vorzugsweise ein Smartphone, durch eine auf dem digitalen Endgerät (4) ausgeführte Anwendungssoftware (4a) mittels des digitalen Endgeräts (4) abgespielt oder ausgeführt werden, **dadurch gekennzeichnet, dass** eine jeweilige Mediendatei längstens während der Dauer eines vordefinierten begrenzten Zeitraums abgespielt oder ausgeführt wird.

2. Verfahren nach Anspruch 1, bei dem die Dauer ein Vielfaches einer Wiedergabedauer der Mediendatei beträgt, vorzugsweise das Doppelte der Wiedergabedauer, höchst vorzugsweise das n-fache der Wiedergabedauer, $n \in \mathbb{R}$.

3. Verfahren nach Anspruch 1 oder 2, bei dem die Mediendatei durch das digitale Endgerät (4) identifiziert und von dem Medienserver (2) heruntergeladen wird, indem das digitale Endgerät (4) eine der Mediendatei zugeordnete Kennung (5a) von einem physischen Kennungsträger (5) liest, vorzugsweise eine auf einem NFC-Chip gespeicherte Kennung, und die Mediendatei anhand dieser Kennung über das Computernetz (3) bei dem Medienserver (2) anfordert.

4. Verfahren nach einem der Ansprüche 1 bis 3, bei dem der Kennungsträger (5) zumindest einmalig physisch an das digitale Endgerät (4) angenähert wird, um die Kennung (5a) zu lesen, die Mediendatei zu laden und optional eine Wiedergabe der Mediendatei zu starten.

5. Verfahren nach Anspruch 4, bei dem bei einer erneuten Annäherung des Kennungsträgers (5) an das digitale Endgerät (4) die Wiedergabe der Mediendatei bei einer letzten Wiedergabeposition innerhalb der Mediendatei fortgesetzt wird.

6. Verfahren nach Anspruch 4 oder 5, bei dem für eine Wiedergabe der Mediendatei eine erneute Annäherung des Kennungsträgers (5) an das digitale Endgerät (4) erforderlich ist, wenn:

   a) die Anwendungssoftware (4a) während der Wiedergabe geschlossen oder anderweitig beendet wird; oder
   b) in der Anwendungssoftware (4a) während der Wiedergabe ein anderes Produkt, insbesondere die Wiedergabe einer anderen Mediendatei, gestartet wird; oder
   c) das Ende einer der Mediendatei zugeordneten Playlist erreicht wird, woraufhin bevorzugt sich die Anwendungssoftware (4a) ohne zusätzliche Meldung schließt.

7. Verfahren nach einem der Ansprüche 1 bis 6, bei dem dem begrenzten Zeitraum ein Zähler (4aa) zugeordnet wird, der die Wiedergabedauer überwacht und in Abhängigkeit von einer bisherigen Wiedergabedauer seinen Zählerstand ändert, wobei der Zähler (4aa) von einem gegenwärtigen Zählerstand weiterzählt, wenn

a) eine andere Anwendungssoftware auf dem digitalen Endgerät (4) die Wiedergabe unterbricht; oder

b) ein Nutzer oder eine Nutzerin (6) des digitalen Endgeräts (4) die Wiedergabe unterbricht.

8. Verfahren nach Anspruch 7, bei dem anschließend eine fortgesetzte Wiedergabe unter Berücksichtigung eines weitergezählten Zählerstandes des Zählers (4aa) erfolgt.

9. Verfahren nach einem der Ansprüche 1 bis 8, bei dem bei Ablauf des vordefinierten Zeitraums, bei Rückbezug auf Anspruch 7 oder 8 bei Erreichen eines maximalen Zählerstandes, eine erneute Annäherung des Kennungsträgers (5) an das digitale Endgerät (4) erforderlich ist, wozu ein Nutzer oder eine Nutzerin (6) des digitalen Endgeräts (4) vorzugsweise entsprechend aufgefordert wird, höchst vorzugsweise mittels einer optisch und/oder akustisch wahrnehmbaren Aufforderung, die das digitale Endgerät (4) ausgibt.

10. Verfahren nach einem der Ansprüche 1 bis 9, bei dem die Wiedergabe ohne eine vorherige Registrierung eines Nutzers oder einer Nutzerin (6) des digitalen Endgeräts (4) bei dem Medienserver (2) oder einer übergeordneten Verwaltungseinrichtung erfolgt.

11. Verfahren zum Verwalten eines Zugriffs auf digitale Mediendateien, welche Mediendateien von einem Medienserver (2) über ein Computernetz (3) bereitgestellt und nach einem Download auf ein digitales Endgerät (4) durch eine auf dem digitalen Endgerät (4) ausgeführte Anwendungssoftware (4a) mittels des digitalen Endgeräts (4) abgespielt oder ausgeführt werden,
**dadurch gekennzeichnet, dass**

a) das digitale Endgerät (4) und/oder dessen Nutzer oder Nutzerin (6) mit einem Konto (2c) auf dem Medienserver (2) oder bei einer übergeordneten Verwaltungseinrichtung verknüpft ist und im Zusammenhang mit dem Download einer jeweiligen Mediendatei auf das digitale Endgerät (4) ein entsprechender Vermerk in dem Konto (2c) eingetragen wird, woraufhin die Mediendatei durch das digitale Endgerät (4) höchstens solange abgespielt oder ausgeführt wird, bis ein gleicher Vermerk in einem anderen solchen Konto eingetragen wird; und

b) optional eine jeweilige Mediendatei längstens während der Dauer eines vordefinierten begrenzten Zeitraums durch das digitale Endgerät (4) abgespielt oder ausgeführt wird, vorzugsweise nach einem Verfahren mit den weiteren Merkmalen gemäß einem der Ansprüche 2 bis 9.

12. Verfahren nach Anspruch 11, bei dem die Mediendatei durch das digitale Endgerät (4) identifiziert und von dem Medienserver (2) heruntergeladen wird, indem das digitale Endgerät (4) eine der Mediendatei zugeordnete Kennung (5a) von einem physischen Kennungsträger (5)bliest, vorzugsweise eine auf einem NFC-Chip gespeicherte Kennung, und die Mediendatei anhand dieser Kennung (5a) über das Computernetz (3) bei dem Medienserver (2) anfordert, wozu der Kennungsträger (5) zumindest einmalig physisch an das digitale Endgerät (4) angenähert wird, um die Kennung (5a) zu lesen, die Mediendatei zu laden und optional eine Wiedergabe der Mediendatei zu starten, wobei in dem Fall, dass auf dem digitalen Endgerät (4) die Anwendungssoftware (4a) aktiv ist, während der Kennungsträger (5) dem digitalen Endgerät (4) angenähert wird, anschließend die mit der Kennung (5a) verknüpfte Mediendatei in der Anwendungssoftware (4a) für ein betreffendes Konto (2c) für die Wiedergabe verfügbar ist, vorzugsweise über ein Shop-Layout, auch nachdem der Kennungsträger (5) wieder von dem digitalen Endgerät (4) entfernt wurde.

13. Verfahren nach Anspruch 12, bei dem die Mediendatei in der Anwendungssoftware (4a) für das betreffende Konto (2c) nicht länger verfügbar ist, sobald die mit der Kennung (5a) verknüpfte Mediendatei in der Anwendungssoftware (4a) für ein anderes Konto verfügbar gemacht wird, insbesondere mit den Verfahrensschritte analog Anspruch 12.

14. System (1) zum Verwalten eines Zugriffs auf digitale Mediendateien, welche Mediendateien von einem Medienserver (2) über ein Computernetz (3) bereitgestellt und nach einem Download auf ein digitales Endgerät (4) durch eine auf dem digitalen Endgerät (4) ausgeführte Anwendungssoftware (4a) mittels des digitalen Endgeräts (4) abspielbar oder ausführbar sind, umfassend:

i) den Medienserver (2), auf dem oder in Wirkverbindung mit dem die Mediendateien gespeichert sind;

ii) wenigstens ein digitales Endgerät (4), insbesondere Smartphone;

iii) die auf dem digitalen Endgerät (4) ausgeführte Anwendungssoftware (4a);

iv) das Computernetz (3), vorzugsweise das Internet, welches Computernetz (3) den Medienserver (2) und das wenigstens eine digitale Endgerät (4) kommunikationstechnisch verbindet;

**dadurch gekennzeichnet, dass**

a) das digitale Endgerät (4) und/oder dessen Nutzer oder Nutzerin (6) mit einem Konto (2c) auf dem Medienserver (2) oder bei einer übergeordneten Verwaltungseinrichtung verknüpft ist, und dass der Medienserver (2) oder die übergeordnete Verwaltungseinrichtung dazu ausgebildet ist, im Zusammenhang mit dem Download einer jeweiligen Mediendatei auf das digitale Endgerät (4) einen entsprechenden Vermerk in dem Konto (2c) einzutragen, woraufhin die Mediendatei durch das digitale Endgerät (4) höchstens solange abspielbar oder ausführbar ist, wie kein gleicher Vermerk in einem anderen solchen Konto eingetragen ist; und/oder

b) eine jeweilige Mediendatei längstens während der Dauer eines vordefinierten begrenzten Zeitraums durch das digitale Endgerät (4) abspielbar oder ausführbar ist.

15. System (1) nach Anspruch 14, ausgebildet zur Durchführung des Verfahrens nach einem der Ansprüche 2 bis 10, 12 oder 13, vorzugsweise indem:

i) die Anwendungssoftware (4a) derart eingerichtet ist, dass die Dauer ein Vielfaches einer Wiedergabedauer der Mediendatei beträgt, vorzugsweise das Doppelte der Wiedergabedauer, höchst vorzugsweise das n-fache der Wiedergabedauer; oder

ii) das digitale Endgerät (4) dazu ausgebildet ist, die Mediendatei zu identifizieren und von dem Medienserver (2) herunterzuladen, indem das digitale Endgerät (4) eine Leseeinheit (4d) zum Lesen einer der Mediendatei zugeordneten Kennung (5a) von einem physischen Kennungsträger (5) aufweist, vorzugsweise eine NFC-Leseeinheit für eine auf einem NFC-Chip gespeicherte Kennung, und dazu ausgebildet ist, die Mediendatei anhand dieser Kennung (5a) über das Computernetz (3) bei dem Medienserver (2) anzufordern, wobei das System (1) weiterhin wenigstens einen physischen Kennungsträger (5) mit einer solchen Kennung (5a) umfasst; oder

iii) das digitale Endgerät (4) dazu ausgebildet ist, insbesondere mittels der Anwendungssoftware (4a), die Kennung (5a) von dem Kennungsträger (5) gemäß ii) zu lesen, wenn der Kennungsträger (5) physisch an das digitale Endgerät (4) angenähert ist, mittels der Kennung (5a) die Mediendatei zu laden und optional eine Wiedergabe der Mediendatei zu starten; oder

iv) das digitale Endgerät (4) dazu ausgebildet ist, insbesondere mittels der Anwendungssoftware (4a), bei einer erneuten Annäherung des Kennungsträgers (5) an das digitale Endgerät (4) nach der Annäherung unter iii) die Wiedergabe der Mediendatei bei einer letzten Wiedergabeposition innerhalb der Mediendatei fortzusetzen; oder

v) das digitale Endgerät (4) dazu ausgebildet ist, insbesondere mittels der Anwendungssoftware (4a), für eine Wiedergabe der Mediendatei nach der Annäherung unter iii) eine erneute Annäherung des Kennungsträgers (5) an das digitale Endgerät (4) abzuwarten, wenn:

a) die Anwendungssoftware (4a) während der Wiedergabe geschlossen oder anderweitig beendet wurde; oder

b) in der Anwendungssoftware (4a) während der Wiedergabe ein anderes Produkt, insbesondere die Wiedergabe eine anderen Mediendatei, gestartet wurde; oder

c) das Ende einer der Mediendatei zugeordneten Playlist erreicht wurde, woraufhin bevorzugt die Anwendungssoftware (4a) dazu ausgebildet ist, sich ohne zusätzliche Meldung zu schließen; oder

vi) in der Anwendungssoftware (4a) dem begrenzten Zeitraum gemäß Variante b) in Anspruch 14 ein Zähler (4aa) zum Überwachen der Wiedergabedauer zugeordnet ist, welcher Zähler (4aa) dazu eingerichtet ist, in Abhängigkeit von einer bisherigen Wiedergabedauer seinen Zählerstand zu ändern, wobei der Zähler (4aa) von einem gegenwärtigen Zählerstand weiterzählt, wenn

a) eine andere Anwendungssoftware (4a) auf dem digitalen Endgerät (4) die Wiedergabe unterbricht; oder

b) ein Nutzer oder eine Nutzerin (6) des digitalen Endgeräts (4) die Wiedergabe unterbricht; oder

vii) die Anwendungssoftware (4a) dazu ausgebildet ist, anschließend eine fortgesetzte Wiedergabe unter Berücksichtigung eines weitergezählten Zählerstandes des Zählers (4aa) gemäß vi) zu veranlassen; oder

viii) die Anwendungssoftware (4a) dazu eingerichtet ist, bei Ablauf des vordefinierten Zeitraums gemäß Variante b) in Anspruch 14, insbesondere bei Erreichen eines maximalen Zählerstandes des Zählers (4aa) gemäß vi), eine erneute Annäherung des Kennungsträgers (5) gemäß ii) an das digitale Endgerät (4) abzuwarten, wozu die Anwendungssoftware (4a) vorzugsweise dazu ausgebildet ist, einen Nutzer oder eine Nutzerin (6) des digitalen Endgeräts (4) entsprechend aufzufordern, höchst vorzugsweise mittels einer optisch und/oder akustisch wahrnehmbaren Aufforderung, die durch das digitale Endgerät (4) ausgebbar ist; oder

ix) im Fall der Variante b) in Anspruch 14 die Anwendungssoftware (4a) dazu ausgebildet ist, die Wiedergabe ohne eine vorherige Registrierung eines Nutzers oder einer Nutzerin (6) des digitalen Endgeräts (4) bei dem Medienserver (2) oder einer übergeordneten Verwaltungseinrichtung zuzulassen; oder

x) im Fall der Variante a) in Anspruch 14 das digitale Endgerät (4) so eingerichtet ist, vorzugsweise mittels der Anwendungssoftware (4a), dass bei auf dem digitalen Endgerät (4) zum Zeitpunkt einer Annäherung des Kennungsträgers (5) gemäß ii) an das digitale Endgerät (4) aktiver Anwendungssoftware (4a) anschließend die mit der Kennung (5a) verknüpfte Mediendatei in der Anwendungssoftware (4a) für ein betreffendes Konto (2c) für die Wiedergabe verfügbar ist, vorzugsweise über ein Shop-Layout, auch nachdem der Kennungsträger (5) wieder von dem digitalen Endgerät (4) entfernt wurde; oder

xi) im Fall der Variante a) in Anspruch 14 das digitale Endgerät (4) so eingerichtet ist, vorzugsweise mittels der Anwendungssoftware (4a), dass die Mediendatei in der Anwendungssoftware (4a) für das betreffende Konto (2c) nicht länger verfügbar ist, sobald die mit der Kennung (5a) gemäß ii) verknüpfte Mediendatei in der Anwendungssoftware (4a) für ein anderes Konto auf dem Medienserver (2) oder bei der übergeordneten Verwaltungseinrichtung verfügbar gemacht ist.

**Fig. 1**

Fig. 2

EP 4 362 471 A1

Fig. 3

EP 4 362 471 A1

Europäisches Patentamt
European Patent Office
Office européen des brevets

# EUROPÄISCHER RECHERCHENBERICHT

**Nummer der Anmeldung**

**EP 23 20 6445**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/089965 A1 (HUYNH CHI [US]; QUARTO BRUCE [US]) 9. Juni 2016 (2016-06-09) * Abbildungen 1-7 * * Absatz [0005] – Absatz [0017] * * Absatz [0051] – Absatz [0115] * ----- | 1-9, 11-15 | INV. H04N21/254 H04N21/258 H04N21/418 H04N21/442 H04N21/4627 |
| X | US 2008/199006 A1 (GANDOLPH DIRK [DE] ET AL) 21. August 2008 (2008-08-21) * Abbildungen 1, 2 * * Absatz [0009] – Absatz [0042] * * Absatz [0059] – Absatz [0063] * ----- | 1-10,14, 15 | H04N21/475 |
| X | US 2012/311723 A1 (BRITT JR JOE FREEMAN [US] ET AL) 6. Dezember 2012 (2012-12-06) * Absatz [0005] – Absatz [0037]; Abbildungen 1-4 * * Absatz [0043] – Absatz [0059] * ----- | 1-9, 11-15 | |

**RECHERCHIERTE SACHGEBIETE (IPC)**

H04N

Der vorliegende Recherchenbericht wurde für alle Patentansprüche erstellt

| Recherchenort | Abschlußdatum der Recherche | Prüfer |
|---|---|---|
| München | 20. Februar 2024 | Döttling, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

# EP 4 362 471 A1

## ANHANG ZUM EUROPÄISCHEN RECHERCHENBERICHT
## ÜBER DIE EUROPÄISCHE PATENTANMELDUNG NR.

EP 23 20 6445

20-02-2024

| Im Recherchenbericht angeführtes Patentdokument | Datum der Veröffentlichung | Mitglied(er) der Patentfamilie | Datum der Veröffentlichung |
|---|---|---|---|
| WO 2016089965 A1 | 09-06-2016 | AU 2015358620 A1 | 15-06-2017 |
| | | BR 112017011689 A2 | 02-01-2018 |
| | | CA 2969224 A1 | 09-06-2016 |
| | | CN 107408961 A | 28-11-2017 |
| | | EP 3228019 A1 | 11-10-2017 |
| | | JP 6738809 B2 | 12-08-2020 |
| | | JP 2018508057 A | 22-03-2018 |
| | | KR 20170100540 A | 04-09-2017 |
| | | SG 11201704258U A | 29-06-2017 |
| | | TW 201628354 A | 01-08-2016 |
| | | US 2018310152 A1 | 25-10-2018 |
| | | US 2019230487 A1 | 25-07-2019 |
| | | US 2020228955 A1 | 16-07-2020 |
| | | WO 2016089965 A1 | 09-06-2016 |
| US 2008199006 A1 | 21-08-2008 | CN 101023402 A | 22-08-2007 |
| | | EP 1637957 A1 | 22-03-2006 |
| | | EP 1792249 A2 | 06-06-2007 |
| | | JP 2008513915 A | 01-05-2008 |
| | | TW 200611099 A | 01-04-2006 |
| | | US 2008199006 A1 | 21-08-2008 |
| | | WO 2006032613 A2 | 30-03-2006 |
| US 2012311723 A1 | 06-12-2012 | US 2012311723 A1 | 06-12-2012 |
| | | US 2015356278 A1 | 10-12-2015 |
| | | US 2018068094 A1 | 08-03-2018 |
| | | WO 2012154550 A1 | 15-11-2012 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202019104321 U1